Europäisches Patentamt

European Patent Office

Office européen des brevets

(11) Numéro de publication : **0 114 137**
**B1**

# FASCICULE DE BREVET EUROPÉEN

(45) Date de publication du fascicule du brevet :
**30.07.86**

(21) Numéro de dépôt : **84400067.9**

(22) Date de dépôt : **12.01.84**

(51) Int. Cl.⁴ : **A 01 M  7/00**, B 05 B 15/02,
B 01 D 35/22

(54) Dispositif et appareil de pulvérisation, notamment destinés aux véhicules agricoles.

(30) Priorité : **14.01.83 FR 8300584**

(43) Date de publication de la demande :
**25.07.84 Bulletin 84/30**

(45) Mention de la délivrance du brevet :
**30.07.86 Bulletin 86/31**

(84) Etats contractants désignés :
**BE DE GB IT**

(56) Documents cités :
**DE-A- 1 482 372**
**FR-A- 2 151 711**
**FR-A- 2 334 427**
**FR-A- 2 516 348**
**US-A- 4 221 667**

(73) Titulaire : **NODET-GOUGIS**
**5 Boulevard du Général-Leclerc B.P. 36**
**F-77130 Montereau (FR)**

(72) Inventeur : **Crinquette, André**
**4, rue de la Liberté**
**F-89340 Saint Agnan (FR)**

(74) Mandataire : **Phélip, Bruno et al**
**c/o Cabinet Harlé & Phélip 21, rue de la Rochefoucauld**
**F-75009 Paris (FR)**

Jouve, 18, rue St-Denis, 75001 Paris, France

## Description

La présente invention concerne un dispositif de pulvérisation de liquide, notamment de solution concentrée, formant buse de pulvérisation et un appareil de pulvérisation comprenant un tel dispositif et notamment destiné à des applications agricoles.

On sait qu'on utilise beaucoup la pulvérisation de produits ou de solutions liquides dans le domaine agricole, pour l'épandage de produits ou surtout le traitement des cultures. On a constaté qu'il était souvent souhaitable d'épandre en solution des produits qui sont normalement à l'état solide. On a donc utilisé des solutions relativement peu concentrées en produits solides afin que les buses de pulvérisation ne risquent pas de se boucher. En effet, les rampes de pulvérisation des appareils agricoles comprennent souvent plusieurs dizaines de buses de pulvérisation et le nettoyage de celles-ci, par démontage, prend un temps très important.

Cependant, on s'est rendu compte que les solutions diluées utilisées jusqu'à présent présentaient des inconvénients dus à la grande quantité du véhicule liquide qui est en général l'eau. En effet, la quantité de produit actif qui peut être appliquée sur un feuillage par exemple est souvent limitée par la petitesse de la quantité de liquide qui peut être retenue par les feuilles. On a donc cherché à utiliser des solutions plus concentrées mais on s'est rapidement heurté au problème du bouchage des orifices de pulvérisation.

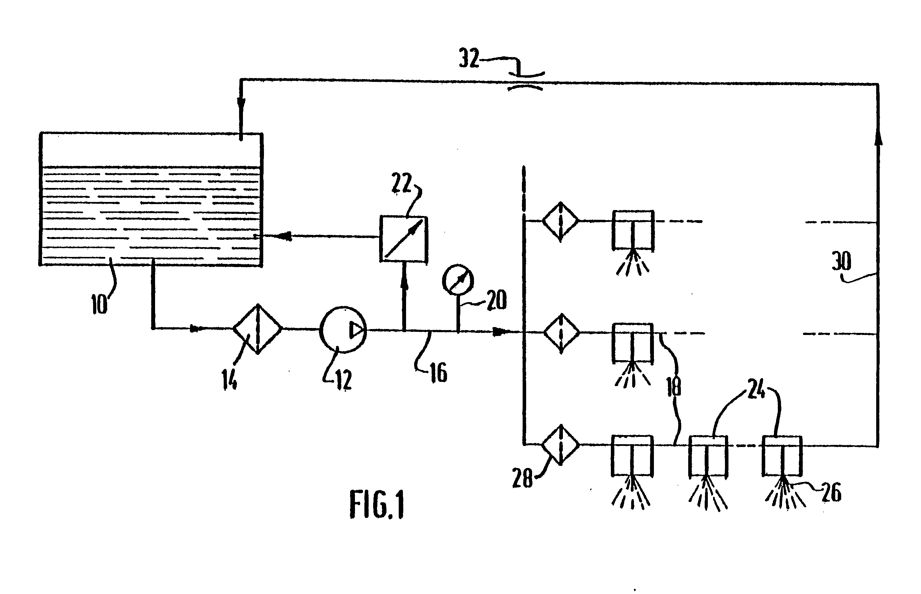

On a cherché à remédier à ce bouchage par installation d'un appareil de pulvérisation comportant des filtres. Par exemple, la figure 1 des dessins annexés est un schéma d'un tel appareil de pulvérisation de type connu.

Sur la figure 1, la référence 10 désigne un réservoir contenant la solution à pulvériser. Le liquide est prélevé par une pompe 12 dont l'aspiration est reliée au réservoir par l'intermédiaire d'un premier filtre 14 destiné à protéger la pompe. Le refoulement de la pompe alimente une canalisation 16 d'alimentation de plusieurs rampes 18. La pression dans chacune des rampes, qui dépend de la pression dans la canalisation 16, indiquée par un manomètre 20, est régulée par un dispositif 22 qui renvoie dans le réservoir 10 une partie du débit refoulée par la pompe 12. Cette caractéristique de renvoi d'une partie de la solution dans le réservoir est avantageuse dans le cas des solutions puisqu'elle permet un brassage du liquide et favorise ainsi la remise en solution des dépôts éventuels, surtout lorsque la canalisation de retour débouche vers le fond du réservoir.

Chaque rampe 18 comporte plusieurs dispositifs 24 de pulvérisation qui ont des buses qui forment les pulvérisations 26. Chaque rampe comporte, en amont des dispositifs de pulvérisation, un autre filtre 28. Les parties aval des rampes sont reliées à une canalisation 30 de retour qui débouche elle-même dans le réservoir 10, mais qui comporte un étranglement 32 permettant le réglage de la pression dans les rampes 18.

Dans cet appareil connu, les filtres 14 et 28 doivent être nettoyés périodiquement afin qu'ils n'introduisent pas une perte de charge trop élevée. Lorsque la solution est très concentrée, le filtre 28 de chaque rampe se trouve assez loin des dispositifs de pulvérisation de l'autre extrémité de la rampe, si bien que les buses correspondantes peuvent se boucher. De toute manière, le nettoyage de plusieurs filtres est nécessaire périodiquement et occupe une partie du temps de l'agriculteur et augmente ainsi les durées d'épandage.

On a aussi proposé de remédier à l'inconvénient précité par montage d'un filtre dans chaque dispositif de pulvérisation tel que 24. Cette solution présente l'avantage de permettre l'enlèvement des petites particules solides aussi près que possible des buses de pulvérisation. Cependant, les filtres se bouchent peu à peu et doivent être nettoyés. L'agriculteur doit donc périodiquement démonter un très grand nombre de buses afin de nettoyer un très grand nombre de filtres. Il doit donc perdre un temps précieux pour cette opération.

La demande de brevet français n° 2 516 348, publiée après la date de priorité revendiquée pour la présente demande, décrit un appareil de pulvérisation dans lequel le nettoyage de filtres est assuré par un circuit spécial de nettoyage comprenant une source de fluide de nettoyage qui est chassé à travers les filtres dans le sens opposé au sens normal de circulation du liquide à pulvériser. Dans cet appareil, le filtre est placé en aval du dispositif d'obturation de chaque buse. Cette solution au problème posé présente des inconvénients puisqu'elle nécessite la réalisation d'un circuit spécial complet pour le seul nettoyage de filtres. Elle présente aussi l'inconvénient de projeter au sol du fluide de nettoyage qui peut se révéler nuisible.

L'invention concerne des appareils de pulvérisation du type dans lequel chaque dispositif de pulvérisation est muni d'un filtre. Cependant, selon l'invention, les filtres ne doivent pas être démontés car leur nettoyage est extrêmement simple et automatique.

De cette manière, le liquide à pulvériser peut être une solution ayant une concentration très élevée en matières solides et ayant tendance à présenter une sédimentation.

L'invention permet aussi l'utilisation de buses de pulvérisation ayant des sections très faibles et permettant ainsi la pulvérisation de très petites quantités de liquide.

Elle concerne aussi un appareil de pulvérisation dans lequel la vitesse de circulation du liquide est très faible et provoque une faible agitation si bien que des dépôts peuvent facilement se former.

Plus précisément, l'invention concerne un dispositif de pulvérisation formant buse de pulvérisation, du type qui délimite un trajet de fluide entre une entrée de liquide à pulvériser destinée à être reliée à une canalisation d'alimentation en liquide à pulvériser à flux continu, et une sortie de liquide à pulvériser, formant ladite buse de pulvérisation, le dispositif de pulvérisation comportant un filtre et un dispositif d'obturation destiné à interrompre la circulation du liquide dans le dispositif de pulvérisation par un obturateur disposé sur ledit trajet. Selon l'invention,

le filtre est disposé entre l'entrée de liquide à pulvériser et le dispositif d'obturation, et au plus près de l'embouchure de cette entrée,

une partie de la paroi de la partie de trajet de fluide comprise entre le filtre et la sortie de liquide ou encore un élément situé sur ce trajet est mobile, si bien que le volume délimité par la partie du trajet comprise entre la sortie et le filtre est variable, et

le dispositif de pulvérisation comporte en outre un dispositif de commande de la partie mobile de paroi ou de l'élément mobile, destiné à réduire le volume de ladite partie de trajet après que l'obturateur ait fermé ledit trajet,

de sorte que du liquide est refoulé à travers le filtre, vers l'entrée, en sens inverse du sens normal utilisé pendant la pulvérisation, et détache du filtre les matières solides qui y sont retenues.

Dans un mode de réalisation, la partie de paroi est formée par un diaphragme. Il est alors avantageux que l'obturateur soit aussi formé par un diaphragme destiné à coopérer avec le siège. Il est alors très avantageux que le même diaphragme forme à la fois la partie de paroi mobile et l'obturateur. Dans un autre mode de réalisation, la partie de paroi mobile est formée par un piston qui se déplace dans une cavité cylindrique du trajet. Il est avantageux que l'obturateur soit aussi formé par un piston mobile dans une cavité cylindrique du trajet. Il est alors très avantageux que le même piston, mobile dans une même cavité, constitue la partie de paroi mobile et l'obturateur.

Lorsque la partie de paroi mobile et l'obturateur sont formés par un organe unique tel qu'un diaphragme ou un piston, cet organe unique peut être commandé par un fluide agissant du côté opposé à celui qui est tourné vers le trajet de fluide. Dans une variante, l'organe unique est commandé par un dispositif élastique qui exerce une force suffisante pour qu'il repousse l'organe unique contre le siège lorsque la pression du fluide à pulvériser est inférieure à un seuil prédéterminé, mais qui est insuffisante lorsque la pression du fluide de pulvérisation est supérieure à un seuil.

Lorsque l'organe unique est un diaphragme, le dispositif élastique comporte avantageusement deux ressorts dont l'un est destiné à repousser la partie du diaphragme formant obturateur et l'autre est destiné à repousser la partie du diaphragme formant la partie mobile de la paroi du trajet.

L'invention concerne aussi un appareil de pulvérisation de liquide, du type qui comporte un réservoir de liquide à pulvériser, une pompe destinée à prélever le liquide dans le réservoir, une canalisation d'alimentation destinée à recevoir le liquide de la pompe et une rampe d'épandage comportant au moins un dispositif de pulvérisation et reliée à la conduite d'alimentation. Selon l'invention, un dispositif de pulvérisation au moins est du type indiqué précédemment, et l'appareil comporte en outre au moins une canalisation de retour reliant la pompe au réservoir afin qu'un courant de fluide circule dans la rampe, même lorsque le dispositif de pulvérisation est obturé.

Il est avantageux que la canalisation comporte au moins un étranglement, permettant le maintien d'une pression déterminée dans la rampe, et, éventuellement, une vanne montée en parallèle par rapport à l'étranglement.

Il est avantageux qu'une rampe au moins comporte, du côté de la canalisation d'alimentation, une vanne et un étranglement montés en parallèle.

Il est en outre avantageux que la canalisation d'alimentation comporte une vanne destinée à relier directement le refoulement de la pompe au réservoir.

La caractéristique de montage d'une canalisation de retour vers un réservoir est déjà connue, comme indiqué précédemment, pour l'entretien d'une circulation permanente dans les rampes, car cette caractéristique améliore le brassage du liquide et réduit les dépôts. Selon l'invention, cette circulation est aussi utilisée pour le retour vers le réservoir des particules qui ont été arrêtées par les filtres des dispositifs de pulvérisation et qui sont ensuite renvoyées dans la rampe lors de la fermeture des dispositifs de pulvérisation, du fait du refoulement d'une partie du liquide qui provoque le décolmatage de chaque filtre.

Ainsi, une caractéristique très importante des dispositifs selon l'invention est que le nettoyage des filtres est automatique puisqu'il s'effectue dès que l'opérateur arrête la pulvérisation, en général après avoir parcouru une longueur du champ dans lequel il assure l'épandage. Même dans le cas de champs de grande dimension, une telle fréquence de nettoyage est bien suffisante.

D'autres caractéristiques et avantages de l'invention ressortiront mieux de la description qui va suivre, faite en référence aux dessins annexés sur lesquels, la figure 1 ayant déjà été décrite :

la figure 2 est une coupe d'une partie d'un dispositif de pulvérisation selon l'invention ;

la figure 3 est une vue en plan de l'organe inférieur du dispositif de la figure 2, suivant les flèches A ;

la figure 4 est une coupe analogue à la figure 2 d'une variante de dispositif de pulvérisation selon l'invention ;

les figures 5 et 6 sont des coupes de deux autres modes de réalisation de dispositif de pulvérisation selon l'invention ;

la figure 7 est un schéma d'une partie d'un appareil de pulvérisation réalisé selon l'invention, le reste de cet appareil étant identique à celui qui est représenté sur la figure 1 ;

la figure 8 est une coupe d'un autre mode de réalisation de dispositif de pulvérisation selon l'invention ;

la figure 9 est une vue en plan de la partie inférieure du dispositif de la figure 8, suivant les flèches A ;

la figure 10 est une coupe d'un autre mode de réalisation de dispositif de pulvérisation selon l'invention ; et

la figure 11 est un schéma d'un autre mode de réalisation d'appareil de pulvérisation selon l'invention.

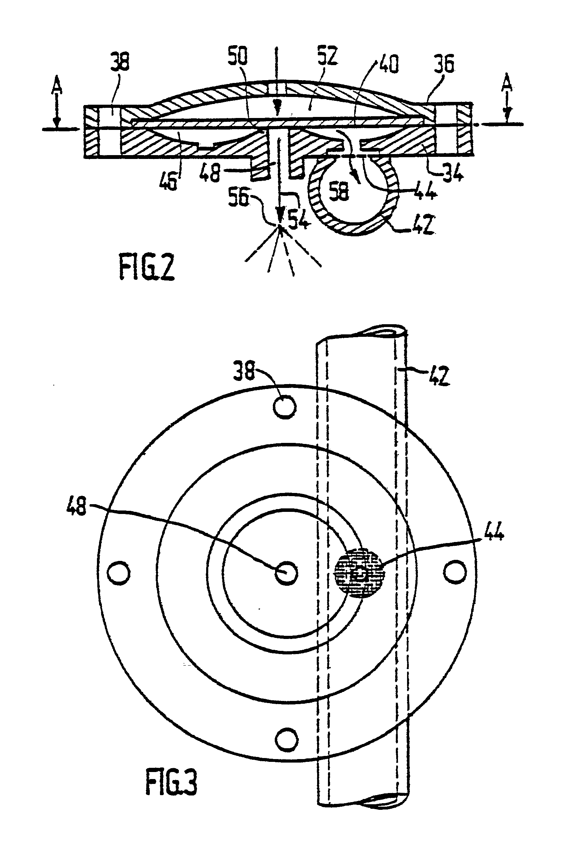

Les figures 2 et 3 représentent un premier mode de réalisation de dispositif de pulvérisation selon l'invention, comprenant un corps 34 et un capot 36 destinés à être solidarisés par des boulons passant dans des trous 38. Le corps et le capot enferment un diaphragme 40 formé de caoutchouc. Un conduit 42 moulé en une seule pièce avec le corps 34 ou collé ou fixé d'une autre manière à celui-ci, fait partie d'une rampe d'alimentation et est destiné à transmettre le liquide à pulvériser, par l'intermédiaire d'un filtre 44, à la chambre annulaire 46 délimitée entre le corps 34 et le diaphragme 40. Le corps 34 délimite en outre un conduit 48 de sortie dont l'entrée est entourée par un rebord 50 formant un siège pour la partie centrale du diaphragme 40 qui joue ainsi le rôle d'un obturateur. Un tel dispositif anti-gouttes dans lequel un courant de fluide est interrompu par application d'un diaphragme contre une lèvre est déjà connu. L'invention met en œuvre ce type de dispositif en coopération avec un filtre ayant une disposition particulière et pour l'obtention d'un décolmatage de ce filtre.

Le diaphragme 40 est repoussé en position de coopération avec le rebord 50, dans laquelle il interrompt la communication entre les conduits 42 et 48, par un fluide de commande pénétrant dans l'espace 52 compris entre le capot 36 et le diaphragme 40, par une canalisation convenable non représentée.

Lors du fonctionnement normal, lorsque le liquide à pulvériser est transmis sous pression par la canalisation 42, il traverse le filtre 44 et débouche dans la chambre annulaire 46. Comme le filtre est sous pression, il repousse le diaphragme 40 lorsque celui-ci n'est pas retenu par le fluide de commande, et il peut alors s'écouler par le conduit 48, dans le sens de la flèche 54, en formant une pulvérisation 56 après passage dans une buse convenable.

Selon l'invention, la chambre annulaire 46 a une forme évidée qui permet un déplacement du diaphragme 40 dans celle-ci même lorsque la partie centrale de celui-ci est venue au contact du rebord 50. Plus précisément, lorsque du fluide de commande sous pression est introduit entre le capot 36 et le diaphragme 40, le diaphragme est d'abord appliqué contre le rebord 20 et interrompt la circulation du fluide de la canalisation 42 vers la buse de pulvérisation. Cependant, le fluide continue à exercer une pression sur la partie périphérique du diaphragme si bien que celui-ci est repoussé dans la chambre annulaire 46. En conséquence, le fluide contenu dans cette chambre est chassé et le seul orifice permettant son évacuation est celui qui est fermé par le filtre 44. En conséquence, le fluide circule à travers ce filtre en sens inverse du sens normal, comme indiqué par la flèche 58. Les particules qui ont donc été retenues par le filtre 44 lors de la pulvérisation normale, sont alors détachées du filtre et tombent dans la conduite 42 qui les entraîne ensuite vers le réservoir.

On note ainsi que le fonctionnement du dispositif selon l'invention comprend d'abord une opération de fermeture de la communication, puis une opération de refoulement de liquide vers l'entrée, à travers le filtre qui est ainsi nettoyé ou décolmaté.

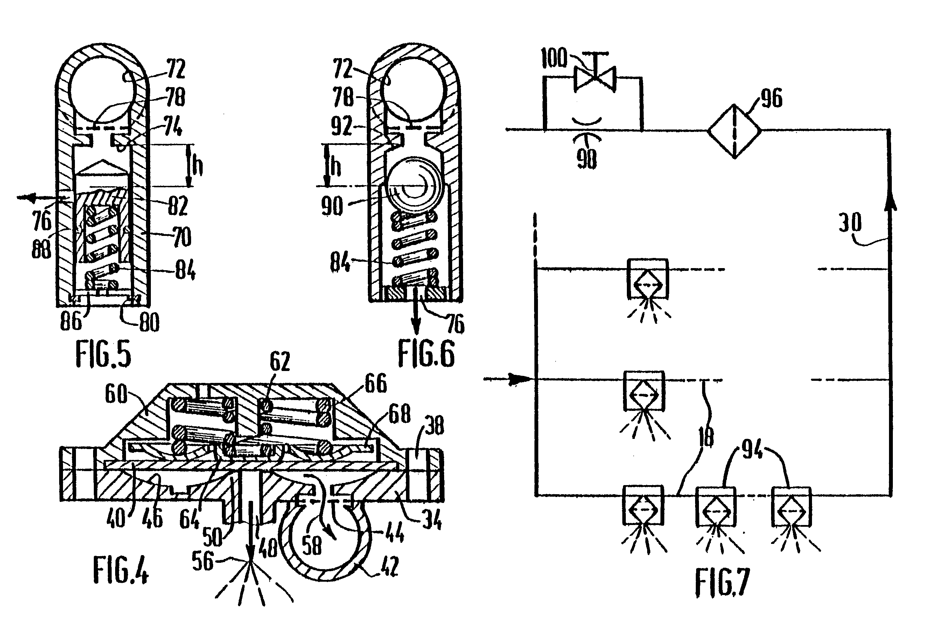

Dans le mode de réalisation des figures 2 et 3, le filtre est donc nettoyé chaque fois que l'opérateur transmet un fluide de commande du diaphragme. Dans le mode de réalisation de la figure 4, ce nettoyage est effectué chaque fois que l'opérateur arrête l'alimentation du dispositif de pulvérisation.

Plus précisément, le dispositif représenté sur la figure 4 a de nombreux éléments analogues à ceux du dispositif des figures 2 et 3. Le corps 34, la canalisation 42 et le filtre 44 ainsi que le diaphragme 40 ont des fonctions analogues à celles des éléments portant les mêmes références sur la figure 2. Le dispositif de la figure 4 diffère cependant de celui de la figure 2 en ce que le capot 60 a une cavité annulaire formée entre une paroi périphérique cylindrique et un plot central de guidage. Un premier ressort 62, guidé par le plot central, est en appui contre le fond du capot et contre une plaque 64 d'application d'une pression à la partie centrale du diaphragme 40. Un ressort 66 retenu latéralement par la paroi cylindrique de la cavité, est en appui contre le fond du capot 60 et contre une coupelle annulaire 68 destinée à exercer une pression sur une zone annulaire du diaphragme, concentrique à la zone centrale.

Les ressorts 62 et 66 sont choisis de manière que la partie centrale soit rappelée plus rapidement vers le bas que la partie périphérique.

Lors du fonctionnement, lorsque l'opérateur commande la transmission du liquide à pulvériser sous pression par la canalisation 42, le liquide pénètre dans la chambre 46 et commence par écarter le diaphragme dans sa partie périphérique. Comme la pression augmente, la partie centrale commence à s'écarter du rebord 50. A ce moment, le liquide s'écoule et la pulvérisation 56 est formée. Lorsque l'opérateur arrête l'alimentation ou lorsque la pression dans la canalisation 42 devient suffisamment faible, le ressort 62 repousse d'abord la partie centrale du diaphragme contre le rebord 50 et interrompt la communication. Le ressort 66 continue à pousser la partie périphérique du diaphragme vers le fond de la cavité 46. En conséquence, du liquide est chassé à travers le filtre 44 dans le sens indiqué par la flèche 58, c'est-à-dire en sens inverse du sens normal et provoque le nettoyage du filtre 44.

Le fonctionnement de ce dispositif est donc très analogue de celui des figures 2 et 3, mais il s'effectue automatiquement sans qu'un fluide de commande de fermeture soit nécessaire.

Les figures 5 et 6 représentent deux autres modes de réalisation de dispositif de pulvérisation selon l'invention, assez proches l'un de l'autre. Sur la figure 5, le corps du dispositif de pulvérisation porte la référence 70. Sa partie supérieure (sur la figure 5) délimite une canalisation 72 destinée à faire partie d'une rampe d'épandage. Le corps forme un épaulement 74 entre la canalisation 72 et un orifice 76 de sortie de liquide à pulvériser. Un filtre 78 est disposé entre l'épaulement 74 et la conduite 72, très près de celle-ci. Le corps comporte en outre une gorge, à la partie opposée à la canalisation 72, pour le logement d'une bague élastique 80.

Un piston 82, ayant la forme d'un pointeau, peut coulisser à l'intérieur du corps 70, dans une chambre cylindrique qui y est formée et dans laquelle débouche l'orifice 76. Un ressort 84 repousse normalement le piston 82 vers l'épaulement 74 qui peut l'arrêter. Le ressort est en appui contre le piston 82 et contre une bague 86 retenue par la bague élastique 80. En outre, un joint torique est avantageusement disposé entre le corps du piston 82 et la cavité cylindrique.

On note en outre que l'orifice 76 formé dans la paroi latérale est à une distance h de l'épaulement 74, dans la direction de déplacement du piston 82.

On note ainsi que, dès que la paroi externe du piston 82 est en face de l'orifice 76, la circulation est interrompue ou très réduite.

Lors du fonctionnement, si l'on suppose que le piston 82 est en appui contre l'épaulement 74, et que la canalisation 72 est alimentée en fluide sous pression, le fluide traverse le filtre 78 et vient repousser le piston 82 qui comprime le ressort 84 et vient finalement dégager l'orifice 76. Le fluide peut alors être pulvérisé. Dès que la pression dans la canalisation 72 tombe en dessous d'une valeur déterminée de seuil, le ressort 84 exerce une force suffisante pour qu'il repousse le piston 82. La partie avant de celui-ci vient d'abord obturer l'embouchure de l'orifice 76 et ferme ou restreint le trajet de circulation de fluide. Cependant, le ressort 84 continue à repousser le piston 82 jusqu'à ce qu'il soit en contact étanche avec l'épaulement 74, c'est-à-dire sur une distance h. Pendant ce parcours, le piston 82 déplace un volume égal au produit de sa section par la distance h. Un volume important de fluide est donc chassé à travers le filtre 78, dans le sens inverse du sens normal, et les particules arrêtées par le filtre sont chassées dans la conduite 72.

La figure 6 représente un dispositif analogue à celui de la figure 5 et les références identiques à celles de cette figure désignent des éléments analogues. Les différences essentielles sont d'une part que le piston 82 est remplacé par une bille 90 qui peut se déplacer dans un alésage, sous la commande d'un ressort 84 qui la repousse contre un épaulement tronconique 92, et la formation de l'orifice 76 de pulvérisation à l'extrémité du corps et non sur le côté. Dans cette variante de la figure 6, l'arrêt de la circulation est obtenu dès que la bille 90 a pénétré par sa partie la plus large dans l'alésage de longueur h. La bille 90 joue donc le rôle d'un obturateur.

Dans les modes de réalisation des figures 2 à 6, un même organe, qu'il s'agisse du diaphragme 40, du piston 82 ou de la bille 90, joue le rôle d'un obturateur, empêchant la circulation du fluide, et d'un dispositif de refoulement, formant une paroi mobile d'une partie de trajet de circulation de fluide. Lorsque l'organe a joué son rôle d'obturateur, il joue son rôle de paroi mobile qui provoque un refoulement du liquide. Bien qu'on ait représenté ces deux fonctions assurées par un même organe, dans ces modes de réalisation, les deux fonctions peuvent évidemment être découplées, le refoulement du liquide ayant cependant lieu de préférence essentiellement après la fermeture du dispositif d'obturation. Il suffit cependant que le fluide refoulé à travers le filtre suffise pour le nettoyage de celui-ci.

La figure 7 représente schématiquement une partie d'un exemple d'appareil selon l'invention, comportant des dispositifs de pulvérisation tels que décrits en référence aux figures 4 à 6. Le reste de l'appareil est tel que représenté sur la figure 1. Les rampes ne comportent plus de filtre à leur entrée, car c'est chaque dispositif 94 de pulvérisation qui assure la filtration du liquide qu'il doit pulvériser. La canalisation 30 de retour comporte un filtre 96 destiné à collecter en un seul endroit toutes les particules solides provenant des dispositifs 94. Le filtre 96 peut aussi par exemple être placé juste au débouché dans le réservoir. On note qu'une vanne 100 est montée en dérivation par rapport à un étranglement 98 analogue à l'étranglement 32 de la figure 1.

Lors du fonctionnement, la pompe transmet, par sa canalisation d'alimentation, du liquide à pulvériser qui a une pression relativement élevée et, lorsque la vanne 100 est fermée, seul un petit courant peut revenir par la canalisation 30 de retour. En conséquence, la pression dans les rampes 18 est élevée et les dispositifs de pulvérisation s'ouvrent et pulvérisent le liquide. Lorsque l'opérateur veut interrompre la pulvérisation, par exemple à l'extrémité d'un champ, il ouvre la vanne 100. La perte de charge créée par l'étranglement 98 disparaît alors pratiquement et la pression diminue fortement dans les rampes 18. En conséquence, les ressorts de rappel des dispositifs 94 viennent fermer l'obturateur et provoquent un nettoyage automatique. Dès que l'opérateur veut recommencer la pulvérisation, il ferme la vanne 100 et la pulvérisation recommence. Ainsi, l'opérateur n'a aucune opération particulière à effectuer pour la commande du nettoyage.

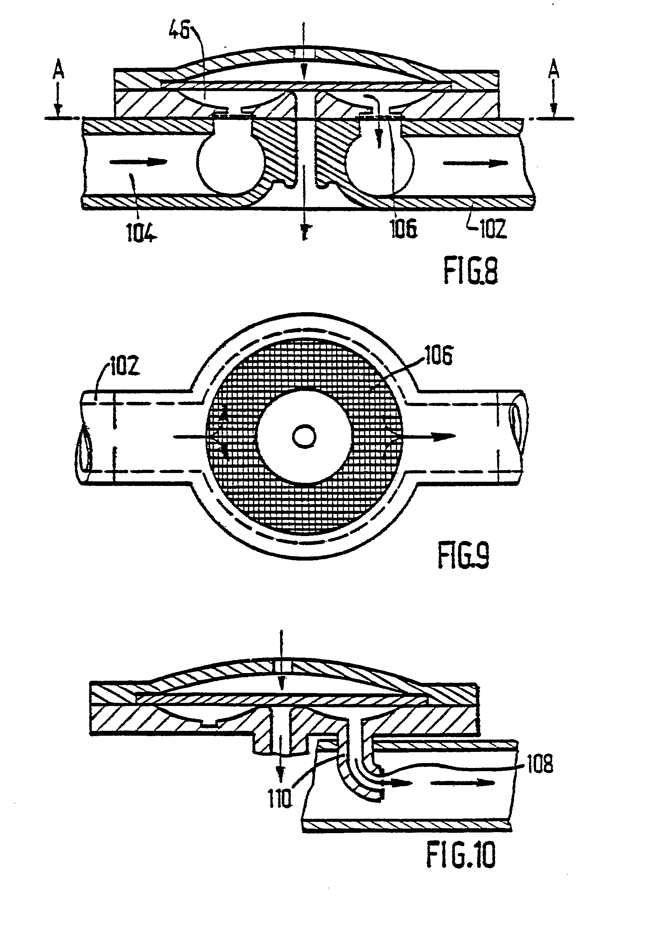

Les figures 8 et 9 représentent un autre mode de réalisation de dispositif selon l'invention particulièrement destiné à des liquides qui forment facilement des dépôts. Le corps 102 a deux tubulures qui débouchent dans une chambre torique qui alimente, sur tout son pourtour, une chambre annulaire analogue à la chambre 46 du mode de réalisation des figures 2 et 3. Un filtre 106 de grande surface est placé entre le corps et la chambre 46. Par ailleurs, le fonctionnement du dispositif est analogue à celui qu'on a décrit en référence aux figures 2 et 3.

La figure 10 représente une variante dans laquelle le filtre 108 est monté à l'embouchure d'un prolongement 110 du corps d'un dispositif analogue à celui des figures 2 et 3. De cette manière, le filtre 108 est tourné vers l'aval et, lorsque le fluide refoulé chasse les particules antérieurement retenues, ces dernières sont facilement entraînées par le courant de fluide.

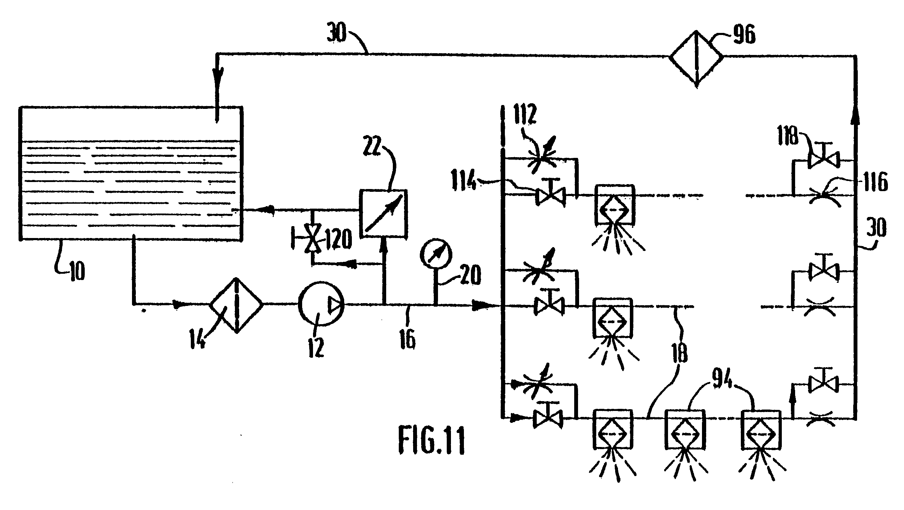

La figure 11 représente une variante d'appareil selon l'invention qui, à certains égards, est analogue à l'appareil de la figure 7 mais permet une commande indépendante de chacune des rampes, en plus d'une commande globale. Sur cette figure, les références identiques aux références des figures 1 et 7 désignent des éléments analogues qu'on ne décrit pas à nouveau.

Chaque rampe 18 est reliée à la canalisation 16 d'alimentation par un dispositif réglable d'étranglement 112 et une vanne 114, montés en parallèle. De même, chaque rampe comporte, au niveau de son raccordement à la canalisation 30 de retour, un étranglement 116 et une vanne 118 montés en parallèle. Lorsqu'une rampe particulière est utilisée pour la pulvérisation, sa vanne d'entrée est ouverte en grand et sa vanne de sortie est fermée afin que la pression dans la rampe soit relativement élevée. Si la rampe ne doit pas fonctionner alors que d'autres pulvérisent du liquide, sa vanne d'entrée est fermée et sa vanne de sortie ouverte. De cette manière, seul un faible débit circule dans la rampe et les dispositifs de pulvérisation sont fermés.

Lorsque toutes les pulvérisations doivent être arrêtées, l'opérateur ouvre une vanne 120 qui relie directement le refoulement de la pompe 12 au réservoir. De cette manière, la pression de la canalisation d'alimentation diminue et tous les dispositifs 94 de pulvérisation se ferment.

Cet appareil donne donc une grande souplesse pour la commande des différentes rampes.

## Revendications

1. Dispositif de pulvérisation formant buse de pulvérisation, du type qui délimite un trajet de fluide entre une entrée de liquide à pulvériser, destinée à être reliée à une conduite d'alimentation en liquide à pulvériser à flux continu, et une sortie de liquide à pulvériser formant ladite buse de pulvérisation, le dispositif de pulvérisation comportant un filtre (44) et un dispositif (40) d'obturation destiné à interrompre la circulation du liquide à pulvériser dans le dispositif de pulvérisation par un obturateur (40) disposé sur ledit trajet, caractérisé en ce que :

le filtre (44) est disposé entre l'entrée de liquide à pulvériser et le dispositif d'obturation et au plus près de l'embouchure de cette entrée,

une partie de paroi de la partie de trajet de fluide comprise entre le filtre (44) et la sortie de liquide ou encore un élément situé sur ce trajet est mobile si bien que le volume délimité dans la partie de trajet comprise entre la sortie et le filtre est variable, et

le dispositif de pulvérisation comporte en outre un dispositif (62, 66) de commande de la partie mobile de paroi ou de l'élément mobile, destiné à réduire le volume de ladite partie de trajet après que l'obturateur ait fermé ledit trajet,

de sorte que du liquide est refoulé à travers le filtre, vers l'entrée, en sens inverse du sens normal utilisé pendant la pulvérisation, et détache du filtre les matières solides qui y sont retenues.

2. Dispositif selon la revendication 1, caractérisé en ce que ladite partie de paroi mobile est formée par un diaphragme (40).

3. Dispositif selon la revendication 1, caractérisé en ce que l'élément mobile est formé par un piston (82, 90) mobile dans une cavité cylindrique.

4. Dispositif selon l'une des revendications 1 et 2, caractérisé en ce que l'obturateur est formé par un diaphragme (40) destiné à coopérer avec un siège (50).

5. Dispositif selon l'une des revendications 1 et 3, caractérisé en ce que l'obturateur est formé par un piston (82, 90) destiné à coopérer avec un siège et mobile dans une cavité cylindrique.

6. Dispositif selon la revendication 1, caractérisé en ce que ladite partie de paroi mobile ou l'élément mobile (82, 90) et l'obturateur sont formés par un même organe (40, 82, 90).

7. Dispositif selon la revendication 6, caractérisé en ce que l'organe unique (40) est commandé par un fluide agissant du côté opposé à celui qui est tourné vers le trajet de fluide.

8. Dispositif selon la revendication 6, caractérisé en ce que l'organe unique (40) est commandé par un dispositif élastique (62, 66) appliquant une force suffisante pour qu'il repousse l'organe unique en obturation de la sortie de liquide lorsque la pression de fluide à pulvériser est inférieure à un seuil déterminé, mais insuffisante à cet effet lorsque la pression du fluide à pulvériser est supérieure à ce seuil.

9. Dispositif selon la revendication 8, caractérisé en ce que l'organe unique est un diaphragme (40) et le dispositif élastique comporte deux ressorts (62, 66) dont l'un est destiné à repousser la partie du diaphragme formant obturateur et l'autre est destiné à repousser la partie du diaphragme formant paroi mobile.

10. Appareil de pulvérisation de liquide, du type qui comporte un réservoir (10) de liquide à pulvériser, une pompe (12) destinée à prélever le liquide dans le réservoir, une canalisation (16) d'alimentation destinée à recevoir du liquide de la pompe, et une rampe (18) d'épandage comporte au moins un dispositif de pulvérisation et reliée à la canalisation d'alimentation, caractérisé en ce que :

un dispositif (94) de pulvérisation au moins et du type selon l'une quelconque des revendications 1 à 9, et

l'appareil comporte en outre au moins une canalisation de retour (30) reliant la rampe (18) au réservoir (10) afin qu'un courant de fluide circule dans la rampe, même lorsque le dispositif de pulvérisation est obturé.

11. Appareil selon la revendication 10, caractérisé en ce que la canalisation (30) de retour comporte un étranglement (98), et éventuellement une vanne (100) montée en parallèle.

12. Appareil selon la revendication 10, caractérisé en ce que la canalisation (30) de retour comporte un filtre (96) destiné à collecter les particules solides provenant des dispositifs (94) de pulvérisation.

13. Appareil selon l'une quelconque des revendications 10 à 12, caractérisé en ce qu'une rampe (18) au moins comporte, de son côté relié à la canalisation d'alimentation, une vanne (114) et un étranglement (112) montés en parallèle.

14. Appareil selon l'une quelconque des revendications 10 à 13, caractérisé en ce qu'une vanne (120) est destinée à relier directement le refoulement de la pompe (12) au réservoir (10).

**Claims**

1. Spraying apparatus, forming a spray nozzle, of the type which defines a fluid path between an inlet for liquid to be sprayed, which inlet is intended to be connected to a duct for the supply of liquid to be sprayed under continuous flow conditions, and an outlet for liquid to be sprayed, which outlet forms the said spray nozzle, the spraying apparatus comprising a filter (44) and an obturating device (40) which is intended to interrupt the circulation of the liquid to be sprayed in the spraying apparatus by means of an obturator (40) disposed on the said path, characterized in that :

the filter (44) is disposed between the inlet for liquid to be sprayed and the obturating device and as close as possible to the mouth of this inlet,

a wall portion of the fluid path portion included between the filter (44) and the outlet for liquid, or indeed an element situated on this path, is movable so that the volume defined within the path portion included between the outlet and the filter is variable, and

the spraying apparatus further comprises a device (62, 66) for controlling the movable portion of the wall or of the movable element intended to reduce the volume of the said path portion after the obturator has closed the said path,

in such a manner that a quantity of liquid is driven back through the filter, towards the inlet, in the direction opposite to the normal direction utilized during spraying, and removes from the filter the solid materials which are retained thereon.

2. Apparatus according to claim 1, characterized in that the said movable wall portion is formed by a diaphragm (40).

3. Apparatus according to claim 1, characterized in that the movable element is formed by a piston (82, 90) which is movable within a cylindrical cavity.

4. Apparatus according to one of claims 1 and 2, characterized in that the obturator is formed by a diaphragm (40) intended to co-operate with a seat (50).

5. Apparatus according to one of claims 1 and 3, characterized in that the obturator is formed by a piston (82, 90) intended to co-operate with a seat and movable within a cylindrical cavity.

6. Apparatus according to claim 1, characterized in that the said movable wall portion or the movable element (82, 90) and the obturator are formed by a single component (40, 82, 90).

7. Apparatus according to claim 6, characterized in that the single component (40) is controlled by a fluid acting from the side opposite to that which is turned towards the fluid path.

8. Apparatus according to claim 6, characterized in that the single component (40) is controlled by an elastic device (62, 66) applying a force which is sufficient to repel the single component in obturation of the liquid outlet when the pressure of the fluid to be sprayed is below a determined threshold, but insufficient for this purpose when the pressure of the fluid to be sprayed is greater than this threshold.

9. Apparatus according to claim 8, characterized in that the single component is a diaphragm (40) and the elastic device includes two springs (62, 66), one of which is intended to repel the part of the diaphragm forming the obturator and the other is intended to repel the part of the diaphragm forming the movable wall.

10. Spraying apparatus for liquid, of the type which comprises a reservoir (10) for liquid to be sprayed, a pump (12) intended to withdraw the liquid in the reservoir, a supply duct (16) intended to receive liquid from the pump, and a spreading system (18) including at least one spraying device and connected to the supply duct, characterized in that :

a spraying apparatus (94) at least is of the type according to any one of claims 1 to 9, and

the apparatus further comprises at least one return duct (30) connecting the system (18) to the reservoir (10) in order that a current of fluid should circulate in the system even when the spraying apparatus is obturated.

11. Apparatus according to claim 10, characterized in that the return duct (30) includes a constriction (98) and possibly a valve (100) which is connected in parallel.

12. Apparatus according to claim 10, characterized in that the return duct (30) includes a filter (96) intended to collect the solid particles originating from the spraying devices (94).

13. Apparatus according to any one of claims 10 to 12, characterized in that at least one system (18) includes, on its side connected to the supply duct, a valve (114) and a constriction (112) which are connected in parallel.

14. Apparatus according to any one of claims 10 to 13, characterized in that a valve (120) is intended to connect the backing side of the pump (12) directly to the reservoir (10).

**Patentansprüche**

1. Eine Zerstäuberdüse bildende Zerstäubervorrichtung der Bauart, die eine Fluidbahn zwischen einem Einlaß zu zerstäubender Flüssigkeit, anzuschließen an eine Speiseleitung mit kontinuierlichem Fluß zu zerstäubender Flüssigkeit, und einem die genannte Zerstäuberdüse bildenden Auslaß zu zerstäubender Flüssigkeit begrenzt, welche Zerstäubervorrichtung ein Filter (44) und eine Absperrvorrichtung (40) zum Unterbrechen der Zirkulation zu zerstäubender Flüssigkeit in der Zerstäubervorrichtung durch ein in der genannten Bahn angeordnetes Sperrglied (40) umfaßt, dadurch gekennzeichnet, daß

das Filter (40) zwischen dem Einlaß zu zerstäubender Flüssigkeit und dem Sperrglied und möglichst nahe der Mündung dieses Einlasses angeordnet ist,

ein Wandungsteil des Teils der Fluidbahn zwischen dem Filter (44) und dem Auslaß der Flüssigkeit oder auch ein in der Bahn befindliches Element beweglich sind derart, daß das in dem Teil der Bahn zwischen dem Auslaß und dem Filter eingeschlossene Volumen variabel ist, und

die Zerstäubervorrichtung ferner eine Steuervorrichtung (62, 66) für den beweglichen Wandungsteil oder das bewegliche Element umfaßt, bestimmt zum Verringern des Volumens des genannten Teils der Bahn, nachdem das Sperrglied die genannte Bahn verschlossen hat,

derart, daß Flüssigkeit durch das Filter in Richtung Einlaß entgegen der normalen während der Zerstäubung angewandten Richtung rückgeführt wird und vom Filter die Feststoffe abträgt, die dort zurückgehalten wurden.

2. Vorrichtung nach Anspruch 1, dadurch gekennzeichnet, daß der genannte bewegliche Wandungsteil von einer Membran (40) gebildet ist.

3. Vorrichtung nach Anspruch 1, dadurch gekennzeichnet, daß das bewegliche Element von einem Kolben (82, 90) gebildet ist, der in einem zylindrischen Hohlraum beweglich ist.

4. Vorrichtung nach einem der Ansprüche 1 und 2, dadurch gekennzeichnet, daß das Sperrglied von einer Membran (40) gebildet ist, bestimmt zum Zusammenwirken mit einem Sitz (50).

5. Vorrichtung nach einem der Ansprüche 1 und 3, dadurch gekennzeichnet, daß das Sperrglied von einem Kolben (82, 90) gebildet ist, bestimmt zum Zusammenwirken mit einem Sitz und beweglich in einem zylindrischen Hohlraum.

6. Vorrichtung nach Anspruch 1, dadurch gekennzeichnet, daß das genannte bewegliche Wandungsteil oder bewegliche Element (82, 90) und das Sperrglied von ein und demselben Organ (40, 82, 90) gebildet sind.

7. Vorrichtung nach Anspruch 6, dadurch gekennzeichnet, daß das einheitliche Organ (40) von einem Fluid gesteuert ist, das auf die Seite einwirkt, welche derjenigen abgewandt ist, die der Fluidbahn zugekehrt ist.

8. Vorrichtung nach Anspruch 6, dadurch gekennzeichnet, daß das einheitliche Organ (40) von einer elastischen Vorrichtung (62, 66) gesteuert ist, die eine hinreichende Kraft ausübt, daß sie das einheitliche Organ in Sperrposition bezüglich des Flüssigkeitsauslasses zurückdrückt sobald der Druck des zu zerstäubenden Fluids unter einer vorgegebenen Schwelle liegt, jedoch unzureichend für diesen Zweck ist, sobald der Druck des zu zerstäubenden Fluids über dieser Schwelle liegt.

9. Vorrichtung nach Anspruch 8, dadurch gekennzeichnet, daß das einheitliche Organ eine Membran (40) ist und die elastische Vorrichtung zwei Federn (62, 66) umfaßt, deren eine dazu bestimmt ist, den Membranabschnitt zurückzudrücken, der das Sperrglied bildet, und die andere bestimmt ist zum Zurückdrücken des Membranteils, das die bewegliche Wandung bildet.

10. Vorrichtung zur Flüssigkeitszerstäubung der Bauart, die ein Reservoir (10) für zu zerstäubende Flüssigkeit, eine Pumpe (12), bestimmt zum Austragen von Flüssigkeit in dem Reservoir, eine Speisekanalanordnung (16), bestimmt zur Aufnahme der Flüssigkeit von der Pumpe, und eine Zerstäuberbank (18) umfaßt, mindestens eine Zerstäubervorrichtung aufweist, angeschlossen an die Speisekanalanordnung, dadurch gekennzeichnet, daß mindestens eine Zerstäubervorrichtung (94) von einer Bauart gemäß einem der Ansprüche 1 bis 9 ist, und die Vorrichtung ferner mindestens eine Rücklaufkanalanordnung (30) umfaßt, welche die Bank (18) mit dem Reservoir (10) verbindet, damit eine Fluidströmung in der Bank zirkuliert, selbst dann, wenn die Zerstäubervorrichtung gesperrt ist.

11. Vorrichtung nach Anspruch 10, dadurch gekennzeichnet, daß die Rücklaufkanalanordnung (30) eine Verengung (98) und gegebenenfalls ein parallel geschaltetes Ventil (100) umfaßt.

12. Vorrichtung nach Anspruch 10, dadurch gekennzeichnet, daß die Rücklaufkanalanordnung (30) ein Filter (96) umfaßt, bestimmt zum Sammeln der Feststoffpartikel, herrührend von der Zerstäubervorrichtung (94).

13. Vorrichtung nach einem der Ansprüche 10 bis 12, dadurch gekennzeichnet, daß zumindest eine Bank (18) auf ihrer an die Speisekanalanordnung angeschlossenen Seite ein Ventil (114) und eine parallel angeordnete Verengung (112) umfaßt.

14. Vorrichtung nach einem der Ansprüche 10 bis 13, dadurch gekennzeichnet, daß ein Ventil (120) dazu bestimmt ist, direkt die Druckseite der Pumpe (12) mit dem Reservoir (10) zu verbinden.

FIG.1

FIG.2

FIG.3

FIG.5

FIG.6

FIG.4

FIG.7

0 114 137

FIG.8

FIG.9

FIG.10

FIG.11